Europäisches Patentamt

European Patent Office

Office européen des brevets

(11) Numéro de publication: **0 332 789 B1**

(12) **FASCICULE DE BREVET EUROPEEN**

(45) Date de publication de fascicule du brevet: **23.02.94**

(51) Int. Cl.5: **B01D 71/02**, B01D 69/00, C04B 41/50, C04B 38/00, B22F 3/26

(21) Numéro de dépôt: **88400639.6**

(22) Date de dépôt: **17.03.88**

(54) **Membrane de filtration et procédé de fabrication.**

(43) Date de publication de la demande:
**20.09.89 Bulletin 89/38**

(45) Mention de la délivrance du brevet:
**23.02.94 Bulletin 94/08**

(84) Etats contractants désignés:
**BE CH DE ES FR GB IT LI NL SE**

(56) Documents cités:
EP-A- 0 039 179      EP-A- 0 097 114
EP-A- 0 188 950      EP-A- 0 208 629
EP-A- 0 223 022      EP-A- 0 242 208
EP-A- 0 263 468      FR-A- 1 517 389
GB-A- 837 797        GB-A- 2 097 777
JP-A-60 180 979      US-A- 3 856 593
US-A- 3 923 688      US-A- 4 082 661
US-A- 4 685 940      US-A- 4 698 157
US-A- 4 724 078

(73) Titulaire: **SOCIETE DES CERAMIOUES TECH-NIOUES**

**F-65460 Bazet(FR)**

(72) Inventeur: **Gillot, Jacques**
**5 impasse de la Hount**
**Odos**
**F-65310 Laloubere(FR)**
Inventeur: **Soria, Raymond**
**23 bis route d'Oursdelille**
**F-65460 Bazet(FR)**

(74) Mandataire: **Weinmiller, Jürgen et al**
**Lennéstrasse 9**
**Postfach 24**
**D-82336 Feldafing (DE)**

**Description**

On connaît des membranes de filtration efficaces et peu coûteuses comportant une structure poreuse en un matériau choisi parmi la céramique frittée et les métaux frittés.

Dans le cas de la céramique frittée, les membranes sont fréquemment constituées principalement exclusivement de grains d'alumine frittés.

On appelle membrane une structure poreuse présentant une couche superficielle dont les pores de diamètres bien définis déterminent le pouvoir séparateur de la membrane. Une telle membrane est fréquemment formée par un support macroporeux avec une ou plusieurs couches microporeuses superposées (voir par exemple, les brevets US-A-4 698 157 et US-A-4 724 078.

Dans le cas d'une membrane constituée par la superposition de plusieurs couches, c'est en général la couche superficielle qui a les pores de plus petit diamètre et qui assure donc la fonction de filtration.

Il a été constaté que les performances de fonctionnement de ces membranes dépendaient non seulement du diamètre de pores de la couche superficielle, mais aussi des interactions chimiques ou physico-chimiques entre la surface de leurs pores et les fluides à filtrer. Il est donc indispensable d'adapter la nature de cette surface au fluide considéré.

Jusqu'à présent, comme cela est décrit par exemple dans les brevets US-A-4 698 157 et US-A-4 724 078, on réalisait soit un ensemble formé par le support macroporeux et une ou plusieurs couches microporeuses, le tout étant constitué du matériau bien adapté au fluide, soit un ensemble formé d'un support macroporeux en un matériau quelconque et d'une ou plusieurs couches constituées du matériau bien adapté au fluide.

Cette solution présente l'inconvénient majeur de nécessiter pour chaque fluide particulier la mise au point d'un procédé de fabrication d'une couche microporeuse constituée du matériau adapté au fluide. Dans le cas des céramiques et des métaux, ceci implique la préparation de poudres à granulométrie bien contrôlée en fonction du diamètre de pores désiré, la mise au point d'une suspension homogène, c'est-à-dire en général bien défloculée, et présentant des caractéristiques rhéologiques bien adaptées à la dépose, d'une méthode de dépose, et la recherche d'une température de frittage appropriée qui dépendra de la dimension des particules à lier par frittage, c'est-à-dire du diamètre de pores.

JP-A-60 180 979 décrit la préparation de membranes céramiques ayant des pores avec un diamètre de 1nm. Les membranes sont obtenues par imprégnation d'un support poreux avec une solution d'isopropoxide d'aluminium, traitement à la vapeur et cuisson. Le support est luimême obtenu par imprégnation d'un support céramique avec un sol d'aluminium et cuisson.

La présente invention a pour but de réaliser de manière plus simple et économique des membranes de filtration bien adaptées à chaque cas d'utilisation.

La présente invention a pour objet une membrane de filtration comportant une structure poreuse en un matériau choisi parmi la céramique frittée et les métaux frittés, caractérisée par le fait que l'ensemble de la surface extérieure ainsi que la surface intérieure des pores de ladite structure est recouvert d'un film mince et continu d'oxyde choisi parmi $MgO$, $Al_2O_3$, $SiO_2$, $TiO_2$, $Cr_2O_3$, $MnO$, $Fe_2O_3$, $CoO$, $NiO$, $CuO$, $ZnO$, $Ga_2O_3$, $GeO_2$, $TlO_2$, $Nb_2O_5$, $MoO_3$, $RuO_2$, $PdO$, $CdO$, $SnO_2$, $La_2O_3$, $HfO_2$, $Ta_2O_5$, $WO_3$, $PbO_2$, $Ce_2O_3$, $Bi_2O_3$, pris isolément ou en mélange, et $B_2O_3$, $BaO$ et $CaO$, pris en mélange avec au moins un desdits oxydes précédents.

Ladite structure étant constituée de manière connue de grains fixés les uns aux autres par des parties "liées" de leurs surfaces et laissant entre eux des pores délimités par les parties restantes "exposées" de leurs surfaces, seules lesdites parties exposées des surfaces des grains sont recouvertes dudit film mince qui est continu d'un grain à l'autre.

La tenue mécanique de la structure poreuse ne risque alors pas d'être altérée par la présence de ce film.

De plus, si ce film a une résistance à la corrosion vis-à-vis des fluides à filtrer ou des fluides utilisés pour nettoyer la membrane, supérieure à celle de ladite structure, il agit comme film protecteur pour cette dernière.

Ledit film a une épaisseur comprise entre 2 et 1000 nanomètres. Ceci permet d'une part que le film protecteur soit suffisamment épais pour assurer sa fonction d'isolation, d'autre part que ce film soit suffisamment mince pour que les variations de température n'y induisent que des contraintes relativement faibles qui ne conduisent donc pas à une fissuration ou une détérioration.

L'invention s'applique avantageusement au cas où le diamètre moyen des pores de la couche de la structure où les pores sont les plus petits, c'est-à-dire des pores de la couche superficielle s'il y a plusieurs couches, est compris entre 0,02 et 15 micromètres environ.

2

L'épaisseur dudit film est comprise entre 0,1 et 10 % du diamètre moyen des pores de la couche de la membrane où les pores sont les plus petits. La porosité de la membrane est alors sensiblement celle de la structure poreuse initiale.

La présente invention a aussi pour objet un procédé de fabrication d'une telle membrane de filtration, ce procédé comportant une étape de fabrication d'une structure poreuse telle que définie ci-dessus, ce procédé étant caractérisé par le fait qu'il comporte une étape de formation, sur la surface des pores de ladite structure, d'un film mince et continu d'oxyde choisi parmi $MgO$, $Al_2O_3$, $SiO_2$, $TiO_2$, $Cr_2O_3$, $MnO$, $Fe_2O_3$, $CoO$, $NiO$, $CuO$, $ZnO$, $Ga_2O_3$, $GeO_2$, $TlO_2$, $Nb_2O_5$, $MoO_3$, $RuO_2$, $PdO$, $CdO$, $SnO_2$, $La_2O_3$, $HfO_2$, $Ta_2O_5$, $WO_3$, $PbO_2$, $Ce_2O_3$, $Bi_2O_3$, pris isolément ou en mélange, et $B_2O_3$, $BaO$ et $CaO$, pris en mélange avec au moins un desdits oxydes précédents.

Pour réaliser ce film on peut utiliser bien entendu toute méthode convenable de dépôt de couche mince dans la masse d'un corps poreux. Des méthodes connues sont l'enduction, le dépôt en phase vapeur, le trempage, etc...

De préférence cependant, ladite étape de formation dudit film comporte elle-même les phases qui vont être détaillés ci-dessous :

- réalisation d'une solution comprenant
  - un ou plusieurs précurseurs organiques de type alcoolate ou acétylacétonate correspondant à l'oxyde ou aux oxydes choisis,
  - un plastifiant, agent de réticulation de type triéthylène-glycol ou triéthanolamine,
  - et un solvant constitué par au moins un alcool,
- imprégnation de ladite structure poreuse par ladite solution, de manière que les pores de cette structure soient remplis par cette solution,
- et une cuisson progressive de cette structure imprégnée de manière à éliminer tous les composants de ladite solution sauf l'oxyde ou les oxydes formés à partir du ou des précurseurs.

De préférence ladite solution contient 1 à 10 % massique d'équivalent oxyde, 5 à 20 % massique de plastifiant et le complément en alcool. Cet alcool solvant est de préférence l'alcool de l'alcoolate ou l'isopropanol dans le cas de l'acétylacétonate.

De préférence encore, ladite phase de cuisson progressive comporte elle-même les étapes suivantes :
- séchage à température sensiblement ambiante, à l'air ambiant,
- montée lente en température jusqu'à 350°C environ, la vitesse de montée étant inférieure à 5 degrés Celsius par minute au moins dans les plages de température où se produit un dégagement de gaz provenant de l'évaporation ou de la décomposition des matières organiques de la solution,
- montée à une température de cuisson comprise entre 350°C et 1200°C,
- maintien à la température de cuisson pendant au moins 10 minutes environ,
- et refroidissement.

Les avantages majeurs du procédé par rapport à la fabrication d'une couche microporeuse entièrement constituée du matériau adapté au fluide à filtrer sont les suivants :

On peut obtenir une grande variété de types de surfaces de membranes à partir d'une seule composition pour la structure poreuse, en n'ayant à modifier que le diamètre des pores de cette structure, et en changeant la composition du film. Il est beaucoup plus facile de modifier la nature de la surface en changeant les produits de départ utilisés pour la formation du film que de modifier cette nature en mettant au point à chaque fois une couche microporeuse de diamètre de pores approprié constituée du mélange d'oxydes approprié.

Dans le cas du procédé préférentiel mentionné ci-dessus, il suffit, pour modifier la composition du film, de modifier la nature du précurseur organique ou de mélanger des précurseurs organiques de métaux différents.

Le procédé selon l'invention permet d'obtenir ledit film en mettant en oeuvre des températures de cuisson en général nettement plus faibles que les températures qui seraient nécessaires au frittage des couches microporeuses de l'art antérieur.

Ceci est particulièrement intéressant pour l'obtention de membranes dont le diamètre des pores de la couche filtrante est relativement élevé, de 2 à 15 micromètres par exemple, pour lesquelles la température de frittage peut atteindre 1800°C.

D'autres caractéristiques et avantages de la présente invention apparaîtront au cours de la description suivante de modes de réalisation de membranes ainsi que leurs procédés de réalisation, ces modes étant donnés à titre illustratif mais nullement limitatif.

On part d'une structure poreuse en alumine constituée par un support macroporeux dont le diamètre des pores est de l'ordre de 15 micromètres, sur lequel est fixée par frittage une couche microporeuse en alumine frittée dont le diamètre des pores est de l'ordre de 0,2 micromètres et dont l'épaisseur est de 40 micromètres.

On veut réaliser un film mince d'oxyde de titane sur cette structure. Pour cela on prépare une solution d'enrobage comprenant 36 g de tétraisopropoxyde de titane (Ti [OiPr] $_4$), 20 g de triéthanolamine (N [CH$_2$ CH$_2$OH]$_3$) et 70 g d'alcool isopropylique.

On procède à une immersion lente du tube en alumine dans cette solution. Au bout de quelques secondes le tube est retiré et est soumis à un séchage de quelques heures à l'air ambiant. On procède alors à la cuisson du tube selon le cycle thermique suivant : montée de température lente (0,5° C/minute) jusqu'à 100° C, suivie d'un palier de 20 minutes, puis montée à 700° C à la vitesse de 1 à 3° C/minute. La température est alors maintenue pendant 40 minutes et l'on procède au refroidissement par coupure de l'alimentation du four.

Pour les autres oxydes précités, on opère de la même manière que pour l'oxyde de titane et les divers constituants de la solution d'enrobage sont indiqués avec leurs proportions dans le tableau I. Les abréviations suivantes ont été utilisées.

TEA        triéthanolamine
TEG        triéthylène glycol
Acac       acétylacétonate ou pentanedionate
EtOH       éthanol
iPrOH      isopropanol
tPeOH      tertiopentanol
OtPe       tertiopentanolate
EtO        éthanolate
OEt        éthanolate
OiPr       isopropoxyde

4

TABLEAU I

| OXYDE | PRECURSEUR | | ALCOOL | | PLASTIFIANT | |
|---|---|---|---|---|---|---|
| MgO | Mg(OEt)4 | 12 g | 88 g | EtOH | 8 g | TEA |
| Al2O3 | AlAcac3 | 44.5 g | 86 g | iPrOH | 7 g | TEG |
| SiO2 | Si(OEt)4 | 4 g | 94 g | EtOH | 5 g | TEA |
| Cr2O3 | CrAcac3 | 27.6 g | 86 g | iPrOH | 8 g | TEG |
| MnO | MnAcac2 | 14.3 g | 90 g | iPrOH | 6 g | TEA |
| Fe2O3 | FeAcac3 | 35.3 g | 80 g | iPrOH | 12 g | TEA |
| CoO | CoAcac3 | 32.8 g | 83 g | iPrOH | 10 g | TEA |
| NiO | NiAcac 2H2O | 31 g | 82 g | iPrOH | 10 g | TEG |
| CuO | CuAcac2 | 19.8 g | 85 g | iPrOH | 9 g | TEA |
| ZnO | ZnAcac2 | 13 g | 84 g | iPrOH | 12 g | TEG |
| Ga2O3 | GaAcac3 | 19.6 g | 80 g | iPrOH | 15 g | TEA |
| GeO2 | Ge(EtO)4 | 10 g | 89 g | iPrOH | 7 g | TEG |
| TiO2 | Ti(OEt) | 7.4 g | 75 g | EtOH | 18 g | TEG |
| Nb2O5 | Nb(OEt)5 | 14 g | 79 g | EtOH | 15 g | TEG |
| MoO3 | MoO2Acac2 | 14.3 g | 79 g | iPrOH | 13 g | TEA |
| RuO2 | RuAcac3 | 30 g | 75 g | iPrOH | 15 g | TEA |
| PdO | PdAcac2 | 12.5 g | 87 g | iPrOH | 8 g | TEA |
| CdO | CdAcac2 | 12 g | 87 g | iPrOH | 10 g | TEA |
| SnO2 | SnAcac3 | 13.8 g | 88 g | iPrOH | 7 g | TEG |
| La2O3 | LaAcac3 | 24 g | 79 g | iPrOH | 12 g | TEG |
| HfO2 | Hf(OtPe)4 | 17.5 g | 78 g | tPeOH | 15 g | TEA |
| Ta2O5 | Ta(OEt)5 | 14.8 g | 79 g | EtOH | 13 g | TEA |
| WO3 | WAcac3 | 10 g | 83 g | iPrOH | 12 g | TEA |
| PbO2 | PbAcac2 | 5 g | 91 g | iPrOH | 6 g | TEG |
| Ce2O3 | CeAcac3 | 13 g | 83 g | iPrOH | 12 g | TEA |
| Bi2O3 | BiAcac3 | 15 g | 79 g | iPrOH | 14 g | TEA |

On donne ci-dessous un exemple où le matériau du film est constitué de deux oxydes, CuO et $TiO_2$. La solution utilisée contient alors :
- 8 g $Cu(OEt)_2$
- 11 g $Ti(OEt)_4$
- 78 g EtOH

- 14 g TEG

La suite du procédé comporte les étapes décrites plus haut.

Dans l'exemple suivant, le matériau du film est un verre comportant cinq oxydes SiO2, B2O3, CaO, Al$_2$O$_3$ et BaO ; trois de ces oxydes B2O3, CaO et BaO n'apparaissent pas dans le tableau I car, à l'état isolé, ils ne peuvent pas former un film intéressant.

Les étapes du procédé sont les mêmes que précédemment et la solution initiale comporte :

- comme précurseur : 19.3 g Si(OEt)4
        1.1 g B(OEt)4
        5.5 g CaAcac2
        7.3 g AlAcac3
        0.7 g BaAcac2
- comme alcool :   70 g EtOH
- comme plastifiant : 20 g TEA.

**Revendications**

1. Membrane de filtration comportant une structure poreuse en un matériau choisi parmi la céramique frittée et les métaux frittés, caractérisé par le fait que l'ensemble de la surface extérieure ainsi que la surface intérieure des pores de ladite structure est recouvert d'un film mince et continu d'oxyde choisi parmi MgO, Al2O3, SiO2, TiO2, Cr2O3, MnO, Fe2O3, CoO, NiO, CuO, ZnO, Ga2O3, GeO2, TlO2, Nb2O5, MoO3, RuO2, PdO, CdO, SnO2, La2O3, HfO2, Ta2O5, WO3, PbO2, Ce2O3, Bi2O3, pris isolément ou en mélange, et B2O3, BaO et CaO, pris en mélange avec au moins un desdits oxydes précédents, ledit film ayant une épaisseur comprise entre 2 et 1000 nanomètres, le diamètre moyen des pores de la couche superficielle de ladite structure étant compris entre 0,02 microns et 15 micromètres, et l'épaisseur dudit film étant comprise entre 0,1 % et 10 % du diamètre moyen des pores de la couche de ladite structure où les pores sont les plus petits.

2. Procédé de fabrication d'une membrane selon la revendication 1, caractérisé par le fait qu'il comporte une étape de formation sur ladite structure d'un film mince et continu d'oxyde choisi parmi MgO, Al2O3, SiO2, TiO2, Cr2O3, MnO, Fe2O3, CoO, NiO, CuO, ZnO, Ga2O3, GeO2, TlO2, Nb2O5, MoO3, RuO2, PdO, CdO, SnO2, La2O3, HfO2, Ta2O5, WO3, PbO2, Ce2O3, Bi2O3, pris isolément ou en mélange, et B2O3, BaO et CaO, pris en mélange avec au moins un desdits oxydes précédents, ladite étape comportant les phases suivantes :
   - Réalisation d'une solution comprenant
      - un ou plusieurs précurseurs organiques de type alcoolate ou acétylacétonate correspondant à l'oxyde ou aux oxydes choisis,
      - un plastifiant, agent de réticulation choisi parmi la triéthanolamine et le triéthylène glycol,
      - un solvant constitué par au moins un alcool,
   - Imprégnation de ladite structure par ladite solution de manière que ses pores soient remplis par cette solution,
   - Cuisson progressive de ladite structure imprégnée de manière à éliminer tous les composants de ladite solution sauf l'oxyde ou les oxydes formés à partir du ou des précurseurs.

3. Procédé de fabrication selon la revendication 2, caractérisé par le fait que ladite solution contient 1 à 10 % massique d'équivalent oxyde, 5 à 20 % massique de plastifiant et le complément en alcool.

4. Procédé de fabrication selon la revendication 2, caractérisé par le fait que ladite phase de cuisson progressive comporte elle-même les étapes suivantes :
   - séchage à température ambiante, à l'air ambiant,
   - montée lente en température jusqu'à 350°C environ, la vitesse de montée étant inférieure à 5 degrés Celsius par minute au moins dans les plages de température où se produit un dégagement de gaz provenant de l'évaporation ou de la décomposition des matières organiques de la solution,
   - montée à une température de cuisson entre 350°C et 1200°C,
   - maintien à la température de cuisson pendant au moins 10 minutes environ,
   - et refroidissement.

**Claims**

1. A filter membrane comprising a porous structure made of a material selected from: sintered ceramics and sintered metals, the membrane being characterized by the fact that the entire external surface thereof, including the surface inside the pores in said structure is covered with a thin and continuous film of an oxide selected from:

$MgO$, $Al_2O_3$, $SiO_2$, $TiO_2$, $Cr_2O_3$, $MnO$, $Fe_2O_3$, $CoO$, $NiO$, $CuO$, $ZnO$, $Ga_2O_3$, $GeO_2$, $TlO_2$, $Nb_2O_5$, $MoO_3$, $RuO_2$, $PdO$, $CdO$, $SnO_2$, $La_2O_3$, $HfO_2$, $Ta_2O_5$, $WO_3$, $PbO_2$, $Ce_2O_3$, and $Bi_2O_3$, alone or in combination, and $B_2O_3$, $BaO$ and $CaO$ mixed together with at least one of the above-specified oxides, said film having a thickness lying in the range of between 2 to 1000 nanometers, the average pore diameter in the superficial layer of the said structure lying in the range 0.02 micrometers to 15 micrometers, and the thickness of said film lying in the range 0.1% to 10% of the average pore diameter in the layer of the said structure having the smallest diameter pores.

2. A method of manufacturing a membrane according to claim 1, characterized by the fact that it includes a step of forming on said structure a thin and continuous film of an oxide selected from:

$MgO$, $Al_2O_3$, $SiO_2$, $TiO_2$, $Cr_2O_3$, $MnO$, $Fe_2O_3$, $CoO$, $NiO$, $CuO$, $ZnO$, $Ga_2O_3$, $GeO_2$, $TlO_2$, $Nb_2O_5$, $MoO_3$, $RuO_2$, $PdO$, $CdO$, $SnO_2$, $La_2O_3$, $HfO_2$, $Ta_2O_5$, $WO_3$, $PbO_2$, $Ce_2O_3$, and $Bi_2O_3$, alone or in combination, and $B_2O_3$, $BaO$ and $CaO$ mixed together with at least one of the above-specified oxides, said step comprises the following stages:

- making a solution containing:
  - one or more organic precursors of the alcoholate or the acetylacetonate type corresponding to the selected oxide(s);
  - a plasticizer, cross-linking agent selected from triethanolamine and triethylene glycol; and
  - a solvent constituted by at least one alcohol;
- impregnating said structure with said solution in such a manner as to cause its pores to be filled with said solution; and
- progressively baking said impregnated structure in such a manner as to eliminate all of the components of said solution other than the oxide(s) formed from the precursor(s).

3. A method of manufacture according to claim 2, characterized by the fact that said solution contains 1% to 10% by mass of oxide equivalent, 5% to 20% by mass of plasticizer, and the remainder being alcohol.

4. A manufacturing method according to claim 2, characterized by the fact that said progressive baking stage itself comprises the following steps:

drying in ambient air at ambient temperature;

slowly raising the temperature to about 350°C with the rate of rise being less than 5°C per minute, at least during those temperature ranges in which gas is given off because of evaporation or decomposition of the organic materials of the solution;

rising to a baking temperature lying in the range 350°C to 1200°C;

maintaining the baking temperature for at least about ten minutes; and

cooling.

**Patentansprüche**

1. Filtermembran mit einer porösen Struktur aus einem Material, das unter Sinterkeramik und gesinterten Metallen ausgewählt ist, dadurch gekennzeichnet, daß die gesamte äußere Oberfläche sowie die innere Oberfläche der Poren der Struktur mit einem dünnen durchgehenden Film eines Oxids bedeckt ist, das ausgewählt ist aus $MgO$, $Al_2O_3$, $SiO_2$, $TiO_2$, $Cr_2O_3$, $MnO$, $Fe_2O_3$, $CoO$, $NiO$, $CuO$, $ZnO$, $Ga_2O_3$, $GeO_2$, $TlO_2$, $Nb_2O_5$, $MoO_3$, $RuO_2$, $PdO$, $CdO$; $SnO_2$, $La_2O_3$, $HfO_2$, $Ta_2O_5$, $WO_3$, $PbO_2$, $Ce_2O_3$, $Bi_2O_3$, und zwar einzeln oder in Mischung, und aus $B_2O_3$, $BaO$, und $CaO$, und zwar in Mischung mit mindestens einem der vorgenannten Oxide, wobei der Film eine Dicke zwischen 2 und 100 nm besitzt und der mittlere Durchmesser der Poren der obersten Schicht der Struktur zwischen 0,02 und 15 $\mu$m liegt sowie die Dicke des Films zwischen 0,1 und 10% des mittleren Durchmessers der Poren der Schicht der Struktur ist, in der die Poren am kleinsten sind.

**2.** Verfahren zur Herstellung einer Membran nach Anspruch 1, dadurch gekennzeichnet, daß es einen Verfahrensschritt aufweist, in dem auf der Struktur ein dünner und kontinuierlicher Film eines Oxids gebildet wird, das ausgewählt wird aus MgO, $Al_2O_3$, $SiO_2$, $TiO_2$, $Cr_2O_3$, MnO, $Fe_2O_3$, CoO, NiO, CuO, ZnO, $Ga_2O_3$, $GeO_2$, $TlO_2$, $Nb_2O_5$, $MoO_3$, $RuO_2$, PdO, CdO; $SnO_2$, $La_2O_3$, $HfO_2$, $Ta_2O_5$, $WO_3$, $PbO_2$, $Ce_2O_3$, $Bi_2O_3$, und zwar einzeln oder in Mischung, und aus $B_2O_3$, BaO, und CaO in Mischung mit mindestens einem der vorgenannten Oxide, wobei dieser Verfahrensschritt die folgenden Phasen enthält:

- Herstellung einer Lösung,
  . aus einem oder mehreren organischen Präkursoren des Typs Alkoholat oder Acetylacetonat entsprechend dem gewählten Oxid bzw. den Oxiden,
  . aus einem Weichmacher, einem Vernetzungsmittel, der unter Triäthanolamin und Triäthylenglykol ausgewählt ist,
  . aus einem Lösungsmittel bestehend aus mindestens einem Alkohol,
- Imprägnierung der Struktur mit der Lösung derart, daß die Poren von der Lösung gefüllt sind,
- progressives Ausheizen der imprägnierten Struktur derart, daß alle Komponenten der Lösung mit Ausnahme des Oxids oder der Oxide beseitigt werden, die ausgehend von dem Präkursor bzw. den Präkursoren gebildet wurden.

**3.** Herstellungsverfahren nach Anspruch 2, dadurch gekennzeichnet, daß die Lösung 1 bis 10 Massenprozent eines Oxidäquivalents, 5 bis 20 Massenprozent eines Weichmachers und im übrigen Alkohol enthält.

**4.** Herstellungsverfahren nach Anspruch 2, dadurch gekennzeichnet, daß die Phase des progressiven Ausheizens ihrerseits die folgenden Verfahrensschritte enthält:

- Trocknung bei Umgebungstemperatur und atmosphärischer Luft,
- langsamer Anstieg der Temperatur bis auf etwa 350°C, wobei die Anstiegsgeschwindigkeit kleiner als 5°C je Minute zumindest in den Temperaturbereichen liegt, in denen eine Gasfreisetzung aufgrund der Verdampfung oder der Zersetzung der organischen Bestandteile der Lösung erfolgt,
- Anstieg auf eine Ausheiztemperatur zwischen 350°C und 1200°C,
- Beibehalten der Ausheiztemperatur während mindestens 10 Minuten etwa,
- und Abkühlung.